# EUROPEAN PATENT APPLICATION

(11) **EP 4 187 134 A1**
(43) Date of publication of application: **31.05.2023**
(21) Application number: 22209649.7
(22) Date of filing: 25.11.2022
(51) Int. Cl.: F16K 15/06, F16K 1/42

(54) **PISTON TYPE CHECK VALVE, ESPECIALLY FOR HOUSEHOLD DISHWASHERS**

(30) Priority: 30.11.2021 PL 43969721
(71) Applicant: Aweco Polska Appliance Sp. z o.o. sp. k, 43-100 Tychy (PL)
(72) Inventor: Kobielski, Maciej, 40-584 Katowice (PL); Kadzielawa, Damian, 44-105 Gliwice (PL)
(74) Representative: Otten, Roth, Dobler & Partner mbB Patentanwälte

(57) **Abstract**

A check valve of piston type with simplified assembly is presented, especially for household appliances and/or dishwashers , having a housing, inside which there is situated an elastic seal, a mushroom shaped piston with a convex surface face, while the cylindrical part of the piston is bounded by a guiding sleeve, where the mushroom (3) of the piston (2) has a contour of curved and/or concave surface (3a), and the mushroom (3) of the piston (2) lies against a composite seal (4) with the shape of a solid formed by an annular core (5) with ribs (8) and a seal (4a) consisting of a contact coating (6) surrounding the core (5) and a conical part (7) having an apex angle in the range of 120-180o, adjacent to the thread (9) of the valve.

## Description

The subject matter of the invention is a piston type check valve, especially for household dishwashers.

From the prior art the patent EP2469136 is known. The invention relates to a check valve containing a valve housing, in which there is situated a single-piece closure element, which is moved by the flowing medium and makes contact with a profiled seal of a sealing section in the closed position. The closure element is guided by a sleeve placed concentrically in the valve housing by means of ribs. The closure element includes a zone A in which the outer contour is flow-optimized and a zone B in which the outer contour is dome-shaped.

The purpose of the invention is to develop a seal constituting a single composite sealing element of compact geometry, which reduces the number of individual sealing elements installed and simplifies the assembly process for check valves, especially those for dishwashers.

The essence of the invention is a check valve of piston type, having a housing, inside which there is situated an elastic seal, a mushroom shaped piston with a convex surface face, while the cylindrical part of the piston is bounded by a guiding sleeve, characterized in that the mushroom of the piston has a contour of curved surface, and the mushroom of the piston lies against a composite seal with the shape of a solid formed by an annular core with ribs and a seal consisting of a contact coating surrounding the core and a conical part having an apex angle in the range of 120-180°, adjacent to the thread of the valve.

The functional part of the piston along with the sleeve and partially the mushroom fits within the contour of the longitudinal section of the male thread.

The core is preferably stiffened with glass fibre. The contact coating is preferably made of silicone rubber. The conical part is made of an elastomer.

The valve with the proposed seal is multifunctional and works as follows:
a) a washer for end sealing of threaded pipes - usually ¾ inch hydraulic couplings are assembled with an independent face seal; such an end sealing washer makes it possible to eliminate a precision measurement of the surface in order to achieve replication of the internal geometry;
b) a reverse piston seal - the tightness of the piston system depends on the compression of the contact, usually performed by a dedicated seal mounted on the piston.

The solution enables significant savings on materials and sealing elements, e.g., no need to procure O-rings, additional shaped elements, and reduced consumption of raw materials for the housing, thanks to the compact geometry of the sealing.

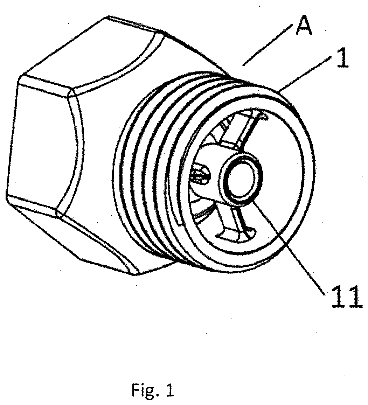

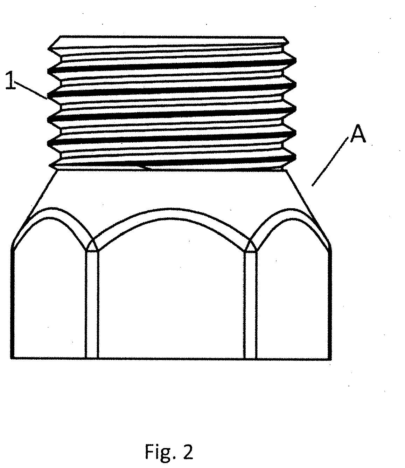

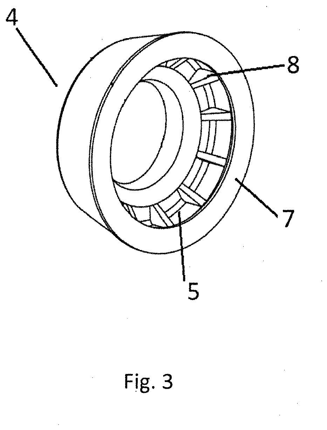

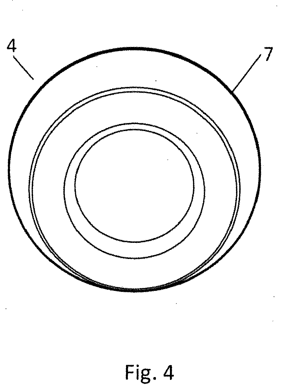

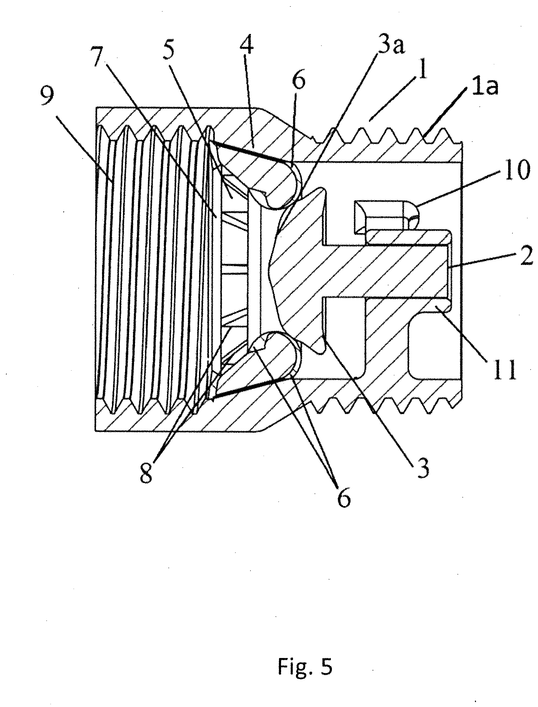

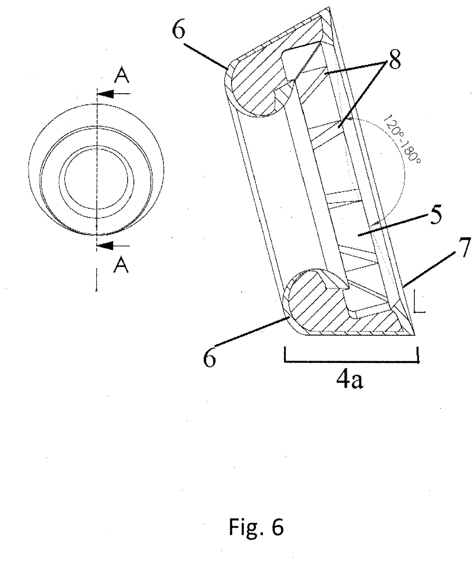

The invention is presented in a drawing, where fig. 1 shows an isometric view of the valve from the piston side, fig. 2 shows the valve in a side view, fig. 3 shows the seal on the side of the face adjacent to the thread surface, fig. 4 shows the seal on the torus side, fig. 5 shows a cross section of the valve with seal, and fig. 6 shows section A-A of the seal.

### The invention is presented in an exemplary embodiment.

The valve A is a piston type check valve. It comprises a housing 1, inside which is found a piston 2 in the shape of a mushroom 3 with convex surface face. The cylindrical part of the piston 2 is bounded by a guide sleeve 11. The mushroom 3 of the piston 2 has a contour of curved surface 3a. The piston 2 resists flowing water, and the shape of the curved surface helps to direct the flow as it flows through the open valve. At the same time, the shape enables a structural adjustment of the curvature - depending on the working parameters, the curvature is increased or decreased, thereby changing the pressure surface. In addition, the face inside the valve being closer to a plane (instead of a cone, for example) allows greater force to operate in the flow against the piston.

The mushroom 3 of the piston 2 lies against a composite seal 4 having the shape of a solid formed by an annular, partly toroidal core 5 and a two-element seal 4a. The stiffened annular core 5 has stiffening ribs 8, which serve to prevent deformation of the core 5 moulding due to shrinkage and additionally, in the process of silicone rubber overmoulding, serve as elements enabling the core to be retained in the injection tool. The seal 4a is comprised of a first element, which is a contact coating 6 surrounding the core 5. The contact coating 6 is made of silicone rubber and it makes contact with the curved surface 3a of the mushroom 3 and the inner wall of the valve housing, ensuring a tight connection.

A second element of the seal 4a is a conical part 7 adjoining at one end the end surface of the valve thread 9 with an apex angle of 140° and at the other end the core 5. With the cylindrical portion of the piston 2 there is a positioning element 10 integrated with the valve housing 1, axially positioning the piston 2. The positioning element 10 also serves as a support for a spring, if a spring is used in the valve.

## Claims

1. A check valve of piston type, especially for household appliances and/or dishwashers, having a housing, inside which there is situated an elastic seal, a mushroom shaped piston with a convex surface face, while the cylindrical part of the piston is bounded by a guiding sleeve, **characterized in that** the mushroom (3) of the piston (2) has a contour of curved and/or concave surface (3a), and the mushroom (3) of the piston (2) lies against a composite seal (4) with the shape of a solid formed by an annular core (5) with ribs (8) and a seal (4a) consisting of a contact coating (6) surrounding the core (5) and a conical part (7) having an apex angle in the range of 120-180°, adjacent to the thread (9) of the valve.

2. The check valve of piston type according to claim 1, **characterized in that** the functional part of the piston (2) along with the sleeve (11) and partially the mushroom (3) fits within the contour of the longitudinal section of the male thread (la).

3. The check valve of piston type according to claim 1, **characterized in that** the core (5) is preferably stiffened with glass fibre.

4. The check valve of piston type according to claim 1, **characterized in that** the contact coating (6) is preferably made of silicone rubber.

5. The check valve of piston type according to claim 1, **characterized in that** the conical part (7) is made of an elastomer.
